# EUROPEAN PATENT SPECIFICATION

(11) **EP 2 731 796 B1**
(45) Date of publication and mention of the grant of the patent: **28.02.2018**
(21) Application number: 12735745.7
(22) Date of filing: 03.07.2012
(51) Int. Cl.: C08J 5/18, B29D 7/01, B29C 47/04

(54) **MICROCAPILLARY FILMS CONTAINING PHASE CHANGE MATERIALS**
MIKROKAPILLARE FOLIEN ENTHALTEND PHASENWECHSELMATERIALIEN
FILMS MICROCAPILLAIRES CONTENANT DES MATIÈRES À CHANGEMENT DE PHASE

(30) Priority: 11.07.2011 US 201161506298 P
(43) Date of publication of application: 21.05.2014
(73) Proprietor: Dow Global Technologies LLC, Midland, MI 48674 (US)
(72) Inventor: KOOPMANS, Rudolf J., CH-8840 Einsiedeln (CH); ZALAMEA BUSTILLO, Luis G., CH-8805 Richterswil (CH); WOCKE, Colmar, CH-8630 Rueti (CH); HOEPPNER, Juergen, 42781 Haan (DE)
(74) Representative: Boult Wade Tennant
(86) International application number: PCT/US2012/045393
(87) International publication number: WO 2013/009538

(56) References cited:
- WO-A1-2012/094317
- US-A1- 2004 224 156
- US-A1- 2008 138 598

## Description

### Field of Invention

The instant invention relates to insulation systems, heating systems, or cooling systems for pipe or flooring applications comprising microcapillary films containing phase change materials.

### Background of the Invention

The use of phase change materials in heat transfer systems is generally known; however, such heat transfer systems require further improvements. For example, such heat transfer systems may benefit from larger surface to volume ratios in order to maintain efficient heat transfer capabilities.

Despite the research efforts in providing improved heat transfer systems, there is a still a need for a heat transfer system which provides for an efficient way to pack large quantities of phase change materials while maintaining efficient heat transfer capabilities together with good chemical integrity and properties.

### Summary of the Invention

The instant invention provides insulation systems, heating systems, or cooling systems for pipe or flooring applications comprising microcapillary films containing phase change materials. The inventive microcapillary film containing phase change materials according to the present invention has a first end and a second end, and comprises: (a) a matrix comprising a thermoplastic material, (b) at least one or more channels disposed in parallel in said matrix from the first end to the second end of said microcapillary film, wherein said one or more channels are at least 5 µm apart from each other, wherein each said one or more channels have a diameter of at least 5 µm, and wherein each of said one or more channels have a circular cross sectional shape, and (c) at least one or more phase change materials disposed in said one or more channels, wherein said microcapillary film has a thickness in the range of from 10 µm to 2000 µm. In an alternative embodiment, the instant invention provides systems comprising microcapillary films containing phase change materials, in accordance with the preceeding embodiment, except that the thermoplastic material is selected from the group consisting polyolefin; polyamide; polyvinylidene chloride; polyvinylidene fluoride; polycarbonate; polystyrene; polyethylene vinyl alcohol; polyvinyl chloride (PVC), polylactic acid (PLA) and polyethylene terephthalate.

In an alternative embodiment, the instant invention provides systems comprising microcapillary films containing phase change materials, in accordance with any of the preceding embodiments, except that the one or more phase change materials are selected from the group consisting of gas, liquid, solid or combinations thereof.

In an alternative embodiment, the instant invention provides systems comprising microcapillary films containing phase change materials, in accordance with any of the preceding embodiments, except that the one or more phase change materials have a viscosity less than the viscosity of said thermoplastic material.

### Brief Description of the Drawings

For the purpose of illustrating the invention, there is shown in the drawings a form that is exemplary; it being understood, however, that this invention is not limited to the precise arrangements and instrumentalities shown.
**Fig. 1** is a top view of an inventive microcapillary film containing phase change materials;
**Fig. 2** is a longitudinal-sectional view of an inventive microcapillary film containing phase change materials;
**Fig. 3** is a cross-sectional view of an inventive microcapillary film containing phase change materials;
**Fig. 4** is an elevated view of an inventive microcapillary film containing phase change materials;
**Fig. 5** is a segment of a longitudinal sectional view of the inventive microcapillary film containing phase change materials, as shown in figure 2;
**Fig. 6** is an exploded view of an inventive microcapillary film containing phase change materials;
**Figs. 7a****-b** are schematic illustration of a microcapillary die; and
**Figs. 8a****-b** are photographs of inventive microcapillary film 1 containing phase change materials (LLDPE/CARBOWAX™).

### Detailed Description of the Invention

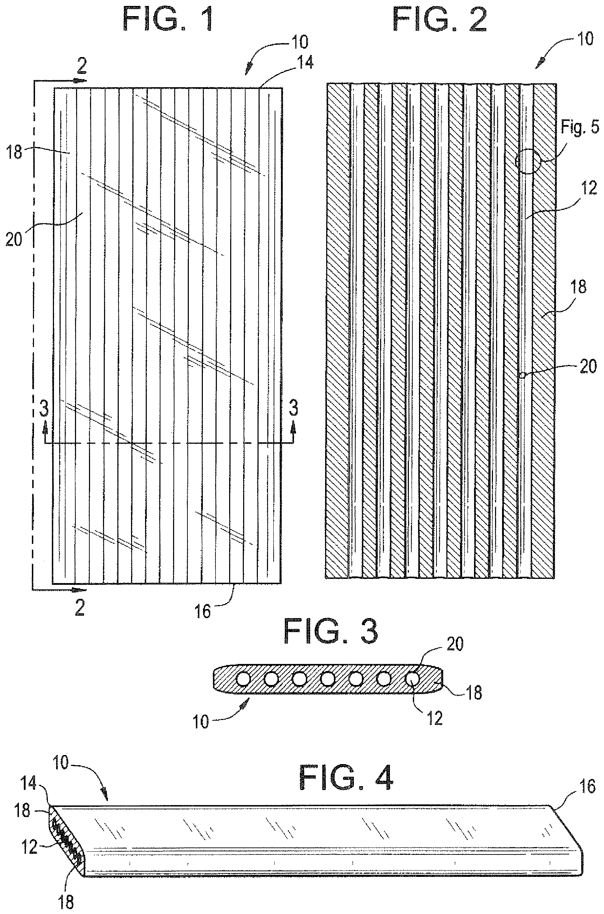

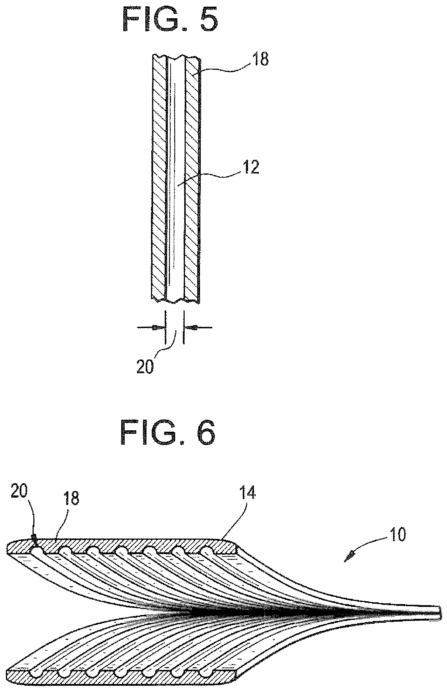

Referring to the drawings wherein like numerals indicate like elements, there is shown, in figures 1-6, a first embodiment of a microcapillary film (10) containing phase change materials (12).

The inventive microcapillary film (10) containing phase change materials (12) according to the present invention has a first end (14) and a second end (16), and comprises: (a) a matrix (18) comprising a thermoplastic material; (b) at least one or more channels (20) disposed in parallel in said matrix (18) from the first end (14) to the second end (16) of said microcapillary film (10), wherein said one or more channels (20) are at least 5 µm apart from each other, wherein each said one or more channels (20) have a diameter of at least 5 µm, and wherein each of said one or more channels have a circular cross sectional shape; and (c) at least one or more phase change materials (12) disposed in said one or more channels (20); wherein said microcapillary film has a thickness in the range of from 10 µm to 2000 µm. The microcapillary film (10) containing phase change materials (12) has a thickness in the range of from 10 µm to 2000 µm; for example, microcapillary film (10) containing phase change materials (12) may have a thickness in the range of from 50 to 2000 µm; or in the alternative, from 100 to 1000 µm; or in the alternative, from 200 to 800 µm; or in the alternative, from 200 to 600 µm; or in the alternative, from 300 to 1000 µm; or in the alternative, from 300 to 900 µm; or in the alternative, from 300 to 700 µm. The film thickness to microcapillary diameter ratio is in the range of from 2:1 to 400:1. The term "microcapillary film," as used herein refers to films as well as tapes.

The microcapillary film (10) containing phase change materials (12) may comprise at least 10 percent by volume of the matrix (18), based on the total volume of the microcapillary film (10) containing phase change materials (12); for example, the microcapillary film (10) containing phase change materials (12) may comprise from 10 to 80 percent by volume of the matrix (18), based on the total volume of the microcapillary film (10) containing phase change materials (12); or in the alternative, from 20 to 80 percent by volume of the matrix (18), based on the total volume of the microcapillary film (10) containing phase change materials (12); or in the alternative, from 30 to 80 percent by volume of the matrix (18), based on the total volume of the microcapillary film (10) containing phase change materials (12).

The microcapillary film (10) containing phase change materials (12) may comprise from 20 to 80 percent by volume of voidage, based on the total volume of the microcapillary film (10) containing phase change materials (12); for example, from 20 to 70 percent by volume of voidage, based on the total volume of the microcapillary film (10) containing phase change materials (12); or in the alternative, from 30 to 60 percent by volume of voidage, based on the total volume of the microcapillary film (10) containing phase change materials (12).

The microcapillary film (10) containing phase change materials (12) may comprise from 50 to 100 percent by volume of the phase change materials (12), based on the total voidage volume, described above; for example, the microcapillary film (10) containing phase change materials (12) may comprise from 60 to 100 percent by volume of the phase change materials (12), based on the total voidage volume, described above; or in the alternative, from 70 to 100 percent by volume of the phase change materials (12), based on the total voidage volume, described above; or in the alternative, from 80 to 100 percent by volume of the phase change materials (12), based on the total voidage volume, described above.

The inventive microcapillary film (10) containing phase change materials (12) has a first end (14) and a second end (16). At least one or more channels (20) are disposed in parallel in the matrix (18) from the first end (14) to the second end (16). The one or more channels (20) are at least 5 µm apart from each other. The one or more channels (20) have a diameter of at least 5 µm; for example, from 5 µm to 1990 µm; or in the alternative, from 5 to 990 µm; or in the alternative, from 5 to 890 µm; or in the alternative, from 5 to 790 µm; or in the alternative, from 5 to 690 µm or in the alternative, from 5 to 590 µm. The one or more channels (20) have a circular cross sectional shape. The one or more channels (20) may further include one or more seals at the first end (14), the second end (16), therebetween the first end (14) and the second end (16), and/or combinations thereof.

The matrix (18) comprises one or more thermoplastic polymers. Such thermoplastic polymers include, but are not limited to, polyolefin; polyamide; polyvinylidene chloride; polyvinylidene fluoride; polycarbonate; polystyrene; polyethylene vinyl alcohol; polyvinyl chloride (PVC), polylactic acid (PLA) and polyethylene terephthalate, and polyester. The matrix (18) may be reinforced via, for example, via glass or carbon fibers and/or any other mineral fillers such talc or calcium carbonate. Exemplary fillers include, but are not limited to, natural calcium carbonates, including chalks, calcites and marbles, synthetic carbonates, salts of magnesium and calcium, dolomites, magnesium carbonate, zinc carbonate, lime, magnesia, barium sulphate, barite, calcium sulphate, silica, magnesium silicates, talc, wollastonite, clays and aluminum silicates, kaolins, mica, oxides or hydroxides of metals or alkaline earths, magnesium hydroxide, iron oxides, zinc oxide, glass or carbon fiber or powder, wood fiber or powder or mixtures of these compounds.

Examples of thermoplastic materials include, but are not limited to, homopolymers and copolymers (including elastomers) of one or more alpha-olefins such as ethylene, propylene, 1-butene, 3-methyl-1-butene, 4-methyl-1-pentene, 3-methyl-1-pentene, 1-heptene, 1-hexene, 1-octene, 1-decene, and 1-dodecene, as typically represented by polyethylene, polypropylene, poly-1-butene, poly-3-methyl-1-butene, poly-3-methyl-1-pentene, poly-4-methyl-1-pentene, ethylene-propylene copolymer, ethylene-1-butene copolymer, and propylene-1-butene copolymer; copolymers (including elastomers) of an alpha-olefin with a conjugated or non-conjugated diene, as typically represented by ethylene-butadiene copolymer and ethylene-ethylidene norbornene copolymer; and polyolefins (including elastomers) such as copolymers of two or more alpha-olefins with a conjugated or non-conjugated diene, as typically represented by ethylene-propylene-butadiene copolymer, ethylene-propylenedicyclopentadiene copolymer, ethylene-propylene-1,5-hexadiene copolymer, and ethylene-propylene-ethylidene norbornene copolymer; ethylene-vinyl compound copolymers such as ethylene-vinyl acetate copolymer, ethylene-vinyl alcohol copolymer, ethylene-vinyl chloride copolymer, ethylene acrylic acid or ethylene-(meth)acrylic acid copolymers, and ethylene-(meth)acrylate copolymer; styrenic copolymers (including elastomers) such as polystyrene, ABS, acrylonitrile-styrene copolymer, α-methylstyrene-styrene copolymer, styrene vinyl alcohol, styrene acrylates such as styrene methylacrylate, styrene butyl acrylate, styrene butyl methacrylate, and styrene butadienes and crosslinked styrene polymers; and styrene block copolymers (including elastomers) such as styrene-butadiene copolymer and hydrate thereof, and styrene-isoprene-styrene triblock copolymer; polyvinyl compounds such as polyvinyl chloride, polyvinylidene chloride, vinyl chloride-vinylidene chloride copolymer, polymethyl acrylate, and polymethyl methacrylate; polyamides such as nylon 6, nylon 6,6, and nylon 12; thermoplastic polyesters such as polyethylene terephthalate and polybutylene terephthalate; polycarbonate and polyphenylene oxide; and glassy hydrocarbon-based resins, including poly-dicyclopentadiene polymers and related polymers (copolymers, terpolymers); saturated mono-olefins such as vinyl acetate, vinyl propionate, vinyl versatate, and vinyl butyrate; vinyl esters such as esters of monocarboxylic acids, including methyl acrylate, ethyl acrylate, n-butyl acrylate, isobutyl acrylate, 2-ethylhexyl acrylate, dodecyl acrylate, n-octyl acrylate, phenyl acrylate, methyl methacrylate, ethyl methacrylate, and butyl methacrylate; acrylonitrile, methacrylonitrile, acrylamide, mixtures thereof; resins produced by ring opening metathesis and cross metathesis polymerization. These resins may be used either alone or in combinations of two or more.

In selected embodiments, thermoplastic polymer may, for example, comprise one or more polyolefins selected from the group consisting of ethylene-alpha olefin copolymers, propylene-alpha olefin copolymers, and olefin block copolymers. In particular, in select embodiments, the thermoplastic polymer may comprise one or more non-polar polyolefins.

In specific embodiments, polyolefins such as polypropylene, polyethylene, copolymers thereof, and blends thereof, as well as ethylene-propylene-diene terpolymers, may be used. In some embodiments, exemplary olefinic polymers include homogeneous polymers; high density polyethylene (HDPE); heterogeneously branched linear low density polyethylene (LLDPE); heterogeneously branched ultra low linear density polyethylene (ULDPE); homogeneously branched, linear ethylene/alpha-olefin copolymers; homogeneously branched, substantially linear ethylene/alpha-olefin polymers; and high pressure, free radical polymerized ethylene polymers and copolymers such as low density polyethylene (LDPE) or ethylene vinyl acetate polymers (EVA).

In one embodiment, the ethylene-alpha olefin copolymer may, for example, be ethylene-butene, ethylene-hexene, or ethylene-octene copolymers or interpolymers. In other particular embodiments, the propylene-alpha olefin copolymer may, for example, be a propylene-ethylene or a propylene-ethylene-butene copolymer or interpolymer.

In certain other embodiments, the thermoplastic polymer may, for example, be a semi-crystalline polymer and may have a melting point of less than 110°C. In another embodiment, the melting point may be from 25 to 100°C. In another embodiment, the melting point may be between 40 and 85°C.

In one particular embodiment, the thermoplastic polymer is a propylene/α-olefin interpolymer composition comprising a propylene/alpha-olefin copolymer, and optionally one or more polymers, e.g. a random copolymer polypropylene (RCP). In one particular embodiment, the propylene/alpha-olefin copolymer is characterized as having substantially isotactic propylene sequences. "Substantially isotactic propylene sequences" means that the sequences have an isotactic triad (mm) measured by ¹³C NMR of greater than 0.85; in the alternative, greater than 0.90; in another alternative, greater than 0.92; and in another alternative, greater than 0.93. Isotactic triads are well-known in the art and are described in, for example, U.S. Patent No. 5,504,172 and International Publication No. WO 00/01745, which refer to the isotactic sequence in terms of a triad unit in the copolymer molecular chain determined by ¹³C NMR spectra.

The propylene/alpha-olefin copolymer may have a melt flow rate in the range of from 0.1 to 500 g/10 minutes, measured in accordance with ASTM D-1238 (at 230°C / 2.16 Kg). All individual values and subranges from 0.1 to 500 g/10 minutes are included herein and disclosed herein; for example, the melt flow rate can be from a lower limit of 0.1 g/10 minutes, 0.2 g/10 minutes, or 0.5 g/10 minutes to an upper limit of 500 g/10 minutes, 200 g/10 minutes, 100 g/10 minutes, or 25 g/10 minutes. For example, the propylene/alpha-olefin copolymer may have a melt flow rate in the range of from 0.1 to 200 g/10 minutes; or in the alternative, the propylene/alpha-olefin copolymer may have a melt flow rate in the range of from 0.2 to 100 g/10 minutes; or in the alternative, the propylene/alpha-olefin copolymer may have a melt flow rate in the range of from 0.2 to 50 g/10 minutes; or in the alternative, the propylene/alpha-olefin copolymer may have a melt flow rate in the range of from 0.5 to 50 g/10 minutes; or in the alternative, the propylene/alpha-olefin copolymer may have a melt flow rate in the range of from 1 to 50 g/10 minutes; or in the alternative, the propylene/alpha-olefin copolymer may have a melt flow rate in the range of from 1 to 40 g/10 minutes; or in the alternative, the propylene/alpha-olefin copolymer may have a melt flow rate in the range of from 1 to 30 g/10 minutes.

The propylene/alpha-olefin copolymer has a crystallinity in the range of from at least 1 percent by weight (a heat of fusion of at least 2 Joules/gram) to 30 percent by weight (a heat of fusion of less than 50 Joules/gram). All individual values and subranges from 1 percent by weight (a heat of fusion of at least 2 Joules/gram) to 30 percent by weight (a heat of fusion of less than 50 Joules/gram) are included herein and disclosed herein; for example, the crystallinity can be from a lower limit of 1 percent by weight (a heat of fusion of at least 2 Joules/gram), 2.5 percent (a heat of fusion of at least 4 Joules/gram), or 3 percent (a heat of fusion of at least 5 Joules/gram) to an upper limit of 30 percent by weight (a heat of fusion of less than 50 Joules/gram), 24 percent by weight (a heat of fusion of less than 40 Joules/gram), 15 percent by weight (a heat of fusion of less than 24.8 Joules/gram) or 7 percent by weight (a heat of fusion of less than 11 Joules/gram). For example, the propylene/alpha-olefin copolymer may have a crystallinity in the range of from at least 1 percent by weight (a heat of fusion of at least 2 Joules/gram) to 24 percent by weight (a heat of fusion of less than 40 Joules/gram); or in the alternative, the propylene/alpha-olefin copolymer may have a crystallinity in the range of from at least 1 percent by weight (a heat of fusion of at least 2 Joules/gram) to 15 percent by weight (a heat of fusion of less than 24.8 Joules/gram); or in the alternative, the propylene/alpha-olefin copolymer may have a crystallinity in the range of from at least 1 percent by weight (a heat of fusion of at least 2 Joules/gram) to 7 percent by weight (a heat of fusion of less than 11 Joules/gram); or in the alternative, the propylene/alpha-olefin copolymer may have a crystallinity in the range of from at least 1 percent by weight (a heat of fusion of at least 2 Joules/gram) to 5 percent by weight (a heat of fusion of less than 8.3 Joules/gram). The crystallinity is measured via DSC method. The propylene/alpha-olefin copolymer comprises units derived from propylene and polymeric units derived from one or more alpha-olefin comonomers. Exemplary comonomers utilized to manufacture the propylene/alpha-olefin copolymer are C₂, and C₄ to C₁₀ alpha-olefins; for example, C₂, C₄, C₆ and C₈ alpha-olefins.

The propylene/alpha-olefin copolymer comprises from 1 to 40 percent by weight of one or more alpha-olefin comonomers. All individual values and subranges from 1 to 40 weight percent are included herein and disclosed herein; for example, the comonomer content can be from a lower limit of 1 weight percent, 3 weight percent, 4 weight percent, 5 weight percent, 7 weight percent, or 9 weight percent to an upper limit of 40 weight percent, 35 weight percent, 30 weight percent, 27 weight percent, 20 weight percent, 15 weight percent, 12 weight percent, or 9 weight percent. For example, the propylene/alpha-olefin copolymer comprises from 1 to 35 percent by weight of one or more alpha-olefin comonomers; or in the alternative, the propylene/alpha-olefin copolymer comprises from 1 to 30 percent by weight of one or more alpha-olefin comonomers; or in the alternative, the propylene/alpha-olefin copolymer comprises from 3 to 27 percent by weight of one or more alpha-olefin comonomers; or in the alternative, the propylene/alpha-olefin copolymer comprises from 3 to 20 percent by weight of one or more alpha-olefin comonomers; or in the alternative, the propylene/alpha-olefin copolymer comprises from 3 to 15 percent by weight of one or more alpha-olefin comonomers.

The propylene/alpha-olefin copolymer has a molecular weight distribution (MWD), defined as weight average molecular weight divided by number average molecular weight (M_{w}/Mₙ) of 3.5 or less; in the alternative 3.0 or less; or in another alternative from 1.8 to 3.0.

Such propylene/alpha-olefin copolymers are further described in details in the U.S. Patent Nos. 6,960,635 and 6,525,157. Such propylene/alpha-olefin copolymers are commercially available from The Dow Chemical Company, under the tradename VERSIFY™, or from ExxonMobil Chemical Company, under the tradename VISTAMAXX™.

In one embodiment, the propylene/alpha-olefin copolymers are further characterized as comprising
(A) between 60 and less than 100, preferably between 80 and 99 and more preferably between 85 and 99, weight percent units derived from propylene, and (B) between greater than zero and 40, preferably between 1 and 20, more preferably between 4 and 16 and even more preferably between 4 and 15, weight percent units derived from at least one of ethylene and/or a C₄₋₁₀ α-olefin; and containing an average of at least 0.001, preferably an average of at least 0.005 and more preferably an average of at least 0.01, long chain branches/1000 total carbons. The maximum number of long chain branches in the propylene/alpha-olefin copolymer is not critical, but typically it does not exceed 3 long chain branches/1000 total carbons. The term long chain branch, as used herein with regard to propylene/alpha-olefin copolymers, refers to a chain length of at least one (1) carbon more than a short chain branch, and short chain branch, as used herein with regard to propylene/alpha-olefin copolymers, refers to a chain length of two (2) carbons less than the number of carbons in the comonomer. For example, a propylene/1-octene interpolymer has backbones with long chain branches of at least seven (7) carbons in length, but these backbones also have short chain branches of only six (6) carbons in length. Such propylene/alpha-olefin copolymers are further described in details in the U.S. Provisional Patent Application No. 60/988,999 and International Patent Application No. PCT/US08/082599.

In certain other embodiments, the base polymer, e.g. propylene/alpha-olefin copolymer, may, for example, be a semi-crystalline polymer and may have a melting point of less than 110°C. In preferred embodiments, the melting point may be from 25 to 100°C. In more preferred embodiments, the melting point may be between 40 and 85°C.

In other selected embodiments, olefin block copolymers, e.g., ethylene multi-block copolymer, such as those described in the International Publication No. WO 2005/090427 and U.S. Patent Application Publication No. US 2006/0199930 describing such olefin block copolymers and the test methods for measuring those properties listed below for such polymers, may be used as the thermoplastic polymer. Such olefin block copolymer may be an ethylene/α-olefin interpolymer:
(a) having a M_{w}/Mₙ from 1.7 to 3.5, at least one melting point, Tₘ, in degrees Celsius, and a density, d, in grams/cubic centimeter, wherein the numerical values of Tₘ and d corresponding to the relationship:
   Tₘ > -2002.9 + 4538.5(d) - 2422.2(d)²; or
(b) having a M_{w}/Mₙ from 1.7 to 3.5, and being characterized by a heat of fusion, ΔH in J/g, and a delta quantity, ΔT, in degrees Celsius defined as the temperature difference between the tallest DSC peak and the tallest CRYSTAF peak, wherein the numerical values of ΔT and ΔH having the following relationships:
   ΔT > -0.1299(ΔH) + 62.81 for ΔH greater than zero and up to 130 J/g,
   AT ≥ 48°C for ΔH greater than 130 J/g,
   wherein the CRYSTAF peak being determined using at least 5 percent of the cumulative polymer, and if less than 5 percent of the polymer having an identifiable CRYSTAF peak, then the CRYSTAF temperature being 30°C; or
(c) being characterized by an elastic recovery, Re, in percent at 300 percent strain and 1 cycle measured with a compression-molded film of the ethylene/α-olefin interpolymer, and having a density, d, in grams/cubic centimeter, wherein the numerical values of Re and d satisfying the following relationship when ethylene/α-olefin interpolymer being substantially free of a cross-linked phase:
   Re > 1481 - 1629(d); or
(d) having a molecular fraction which elutes between 40°C and 130°C when fractionated using TREF, characterized in that the fraction having a molar comonomer content of at least 5 percent higher than that of a comparable random ethylene interpolymer fraction eluting between the same temperatures, wherein said comparable random ethylene interpolymer having the same comonomer(s) and having a melt index, density, and molar comonomer content (based on the whole polymer) within 10 percent of that of the ethylene/α-olefin interpolymer; or
(e) having a storage modulus at 25°C, G' (25°C), and a storage modulus at 100°C, G' (100°C), wherein the ratio of G' (25°C) to G' (100°C) is in the range of 1:1 to 9:1.

Such olefin block copolymer, e.g. ethylene/α-olefin interpolymer may also:
(a) have a molecular fraction which elutes between 40°C and 130°C when fractionated using TREF, characterized in that the fraction having a block index of at least 0.5 and up to 1 and a molecular weight distribution, M_{w}/Mₙ, greater than 1.3; or
(b) have an average block index greater than zero and up to 1.0 and a molecular weight distribution, M_{w}/Mₙ, greater than 1.3.

In one embodiment, matrix 18 may further comprise a blowing agent thereby facilitating the formation a foam material. In one embodiment, the matrix may be a foam, for example a closed cell foam. In another embodiment, matrix 18 may further comprise one or more fillers thereby facilitating the formation a microporous matrix, for example, via orientation, e.g. biaxial orientation, or cavitation, e.g. uniaxial or biaxial orientation, or leaching, i.e. dissolving the fillers. Such fillers include, but are not limited to, natural calcium carbonates, including chalks, calcites and marbles, synthetic carbonates, salts of magnesium and calcium, dolomites, magnesium carbonate, zinc carbonate, lime, magnesia, barium sulphate, barite, calcium sulphate, silica, magnesium silicates, talc, wollastonite, clays and aluminum silicates, kaolins, mica, oxides or hydroxides of metals or alkaline earths, magnesium hydroxide, iron oxides, zinc oxide, glass or carbon fiber or powder, wood fiber or powder or mixtures of these compounds.

The one or more phase change materials (12) may be selected from the group consisting of gas, liquid, solid or combinations thereof. In one embodiment, the one or more phase change materials (12) may have a viscosity less than the viscosity of said thermoplastic material.

The one or more phase change materials (12) may be any material suitable for a heat transfer system or cooling system or insulation system. In general, the one or more phase change materials (12) can be any substance (or any mixture of substances) that has the capability of absorbing or releasing thermal energy to reduce or eliminate heat flow within a temperature stabilizing range. The temperature stabilizing range can include a particular transition temperature or a particular range of transition temperatures. The one or more phase change materials (12) used in conjunction with various embodiments of the invention typically are capable of inhibiting a flow of thermal energy during a time when the one or more phase change materials (12) are absorbing or releasing heat, typically as the one or more phase change materials (12) undergo a transition between two states (e.g., liquid and solid states, liquid and gaseous states, solid and gaseous states, or two solid states). This action is typically transient. In some instances, the one or more phase change materials (12) can effectively inhibit a flow of thermal energy until a latent heat of the phase change material is absorbed or released during a heating or cooling process. Thermal energy can be stored or removed from the one or more phase change materials (12), and the one or more phase change materials (12) typically can be effectively recharged by a source of heat or cold. By selecting an appropriate phase change material (12), a microcapillary film (10) containing one or more phase change materials (12) can be designed for use in any of various products.

For certain applications, the one or more phase change materials (12) can be a solid/solid phase change material. A solid/solid phase change material is a type of phase change material that undergoes a transition between two solid states (e.g., a crystalline or mesocrystalline phase transformation) and hence typically does not become a liquid during use.

The phase change materials (12) can include a mixture of two or more substances. By selecting two or more different substances and forming a mixture, a temperature stabilizing range can be adjusted over a wide range for any particular application of the microcapillary film (10) containing one or more phase change materials (12). In some instances, a mixture of two or more different substances can exhibit two or more distinct transition temperatures or a single modified transition temperature when incorporated in microcapillary film (10).

Phase change materials (12) that can be used in conjunction with various embodiments of the invention include various organic and inorganic substances. Examples of phase change materials (12) include, but are not limited to, hydrocarbons (e.g., straight-chain alkanes or paraffinic hydrocarbons, branched-chain alkanes, unsaturated hydrocarbons, halogenated hydrocarbons, and alicyclic hydrocarbons), hydrated salts (e.g., calcium chloride hexahydrate, calcium bromide hexahydrate, magnesium nitrate hexahydrate, lithium nitrate trihydrate, potassium fluoride tetrahydrate, ammonium alum, magnesium chloride hexahydrate, sodium carbonate decahydrate, disodium phosphate dodecahydrate, sodium sulfate decahydrate, and sodium acetate trihydrate), waxes, oils, water, fatty acids, fatty acid esters, dibasic acids, dibasic esters, 1-halides, primary alcohols, secondary alcohols, tertiary alcohols, aromatic compounds, clathrates, semi-clathrates, gas clathrates, anhydrides (e.g., stearic anhydride), ethylene carbonate, polyhydric alcohols (e.g., 2,2-dimethyl-1,3-propanediol, 2-hydroxymethyl-2-methyl-1,3-propanediol, ethylene glycol, polyethylene glycol, pentaerythritol, dipentaerythritol, pentaglycerine, tetramethylol ethane, neopentyl glycol, tetramethylol propane, 2-amino-2-methyl-1,3-propanediol, monoaminopentaerythritol, diaminopentaerythritol, and tris(hydroxymethyl)acetic acid), polymers (e.g., polyethylene, polyethylene glycol, polyethylene oxide, polypropylene, polypropylene glycol, polytetramethylene glycol, polypropylene malonate, polyneopentyl glycol sebacate, polypentane glutarate, polyvinyl myristate, polyvinyl stearate, polyvinyl laurate, polyhexadecyl methacrylate, polyoctadecyl methacrylate, polyesters produced by polycondensation of glycols (or their derivatives) with diacids (or their derivatives), and copolymers, such as polyacrylate or poly(meth)acrylate with alkyl hydrocarbon side chain or with polyethylene glycol side chain and copolymers including polyethylene, polyethylene glycol, polyethylene oxide, polypropylene, polypropylene glycol, or polytetramethylene glycol), metals, and mixtures thereof.

The selection of a phase change material (12) is typically dependent upon a desired transition temperature or a desired application of the microcapillary film (10) containing one or more phase change materials (12). For example, a phase change material (12) having a transition temperature near room temperature or normal body temperature can be desirable for clothing applications.

The phase change material (12) according to some embodiments of the invention can have a transition temperature in the range of from -40° C to 125° C; for example, -5° C to 125° C; or in the alternative, 0° C to 50° C; or in the alternative, 15° C to 45° C; or in the alternative, 22° C to 40° C; or in the alternative, 22° C to 28° C.

Particularly useful phase change materials (12) include paraffinic hydrocarbons having from 10 to 44 carbon atoms (i.e., C₁₀-C₄₄ paraffinic hydrocarbons). Such paraffinic hydrocarbons include, but are not limited to, n-Octacosane, n-Heptacosane, n-Hexacosane, n-Pentacosane, n-Tetracosane, n-Tricosane, n-Docosane, n-Heneicosane, n-Eicosane, n-Nonadecane, n-Octadecane, n-Heptadecane, n-Hexadecane, n-Pentadecane, n-Tetradecane, and n-Tridecane.

Other useful phase change materials (12) include polymeric phase change materials having transition temperatures suitable for a desired application of the resulting microcapillary film (10) containing one or more phase change materials (12).

A polymeric phase change material can include a polymer (or a mixture of polymers) having any of various chain structures and including one or more types of monomer units. In particular, a polymeric phase change material can include a linear polymer, a branched polymer (e.g., a star-branched polymer, a comb-branched polymer, or a dendritic-branched polymer), or a mixture thereof. For certain applications, a polymeric phase change material desirably includes a linear polymer or a polymer with a small amount of branching to allow for a greater density and a greater degree of ordered molecular packing and crystallization. Such greater degree of ordered molecular packing and crystallization can lead to a larger latent heat and a narrower temperature stabilizing range (e.g., a well-defined transition temperature). A polymeric phase change material can include a homopolymer, an interpolymer, and a mixture thereof. As one of ordinary skill in the art will understand, the reactivity and functionality of a polymer can be altered by addition or replacement of one or more functional groups, such as, for example, amines, amides, carboxyls, hydroxyls, esters, ethers, epoxides, anhydrides, isocyanates, silanes, ketones, aldehydes, and so forth. Also, a polymeric phase change material can include a polymer capable of crosslinking, entanglement, or hydrogen bonding in order to increase toughness or resistance to heat, moisture, or chemicals.

Additional useful phase change materials include polymeric phase change materials based on polyethylene glycols that are endcapped with fatty acids. For example, polyethylene glycol fatty acid diesters having a melting point in the range of 22°C to 35°C can be formed from polyethylene glycols having a number average molecular weight in the range of 400 to 600 that are endcapped with stearic acid or lauric acid. Further useful phase change materials include polymeric phase change materials based on tetramethylene glycol. For example, polytetramethylene glycols having a number average molecular weight in the range of 1,000 to 1,800 (e.g., Terathane™ 1000 and 1800, available from DuPont Inc., Wilmington, Del.) typically have a melting point in the range of 19°C to 36°C. Polyethylene oxides having a melting point in the range of 60°C to 65°C also can be used as phase change materials in some embodiments of the invention.

Additional exemplary polymeric phase change materials can include Polyoctadecyl methacrylate, Polyhexadecyl methacrylate, Poly-N-tetradecyl polyacrylamide, oly-N-tetradecyl polyacrylamide-1,1, dihydroperfluoro, Poly-1-decene, Poly-1-heptene, cis-polyoctenamer, (Vestenamer 6213, available from Degussa AG, Frankfurt, Germany), Poly-1-octene, Poly-1-nonene, trans-polypentemer, Poly-1-undecene, cis-polyisoprene, syndiotactic 1,2-poly(1,3-pentadiene), 1-methyl-polydodecamethylene, Ethers Polymethyleneoxytetramethylene oxide (Poly-1,3-dioxepane), Polyhexamethyleneoxymethylene oxide, Polyoxacyclobutane (POX), n-octadecyl polyacetaldehyde, Polytetramethylene glycol 1000, (Terathane polyTHF 1000, available from DuPont Inc., Wilmington, Delaware), Polytetramethylene glycol 1400 (Terathane polyTHF 1400, available from DuPont Inc., Wilmington, Delaware), Polytetramethylene glycol 1800 (Terathane polyTHF 1800, available from DuPont Inc., Wilmington, Delaware), Polytetramethylene glycol 2000 (Terathane polyTHF 2000, available from DuPont Inc., Wilmington, Delaware), Polydodecyl vinyl ether, Polyvinyl laurate, Polyvinyl myristate, 3,3-dimethyl-polytrimethylene sulfide, Polymethylene sulfide, Polytetramethylene disulfide, Polysulfur trioxide, 1-methyl-trimethylene-poly-sulfonyldivalerate, beta-2-polydiethyl siloxane, Nonamethylene-poly-disiloxanylene, dipropionamide-diethyl dimethyl (Si), Nonamethylene-poly-disiloxanylene, dipropionamide-tetraethyl (Si), Polymethyl hexadecyl siloxane, Poly-(hexamethylene)cyclopropylene dicarboxamide-cis-N,N'-dibutyl, Poly-(hexamethylene)cyclopropylene dicarboxamide-cis-N,N'-diethyl, Poly-(hexamethylene)cyclopropylene dicarboxamide-cis-N,N'-diisopropyl, Poly-(hexamethylene)cyclopropylene dicarboxamide-cis-N,N'-dimethyl, Polypentamethylene adipamide-15 2,2,3,3,4,4 hexafluoro (diamine)-cis- N,N'-dibutyl, Polypentamethylene adipamide-2,2,3,3,4,4 hexafluoro (diamine)-cis- N,N'-diethyl, Polypentamethylene adipamide-2,2,3,3,4,4 hexafluoro (diamine)-cis- N,N'-diisopropyl, Polypentamethylene adipamide-2,2,3,3,4,4 hexafluoro (diamine)-cis- N,N'-dimethyl Poly-(4,4'-methylene diphenylene 32 sebacamide)-N,N'-diethyl, Polypentamethylene (hexamethylene 25 disulfonyl)-dicaproamide, Poly-[ethylene 4,4'-oxydimethylene- di-2-(1,3-dioxolane)-caprylate], Polypentamethylene adipate- 34 2,2,3,3,4,4 hexafluoro (4-methyl-(R+)-7- polyhydroxyenanthic acid), Poly-[4-hydroxy tetramethylene-2-(1,3-dioxolane) caprylic acid] (cis or trans), Polypentamethylene 2,2'-dibenzoate, Polytetramethylene 2,2'-dibenzoate, Poly-1-methyl-trimethylene 2,2' dibenzoate, Polycaprolactone glycol (Molecular 35 45 weight = 830).

In some instances, a polymeric phase change material having a desired transition temperature can be formed by reacting a phase change material (e.g., a phase change material discussed above) with a polymer (or a mixture of polymers). Thus, for example, n-octadecylic acid (i.e., stearic acid) can be reacted or esterified with polyvinyl alcohol to yield polyvinyl stearate, or dodecanoic acid (i.e., lauric acid) can be reacted or esterified with polyvinyl alcohol to yield polyvinyl laurate. Various combinations of phase change materials (e.g., phase change materials with one or more functional groups such as amine, carboxyl, hydroxyl, epoxy, silane, sulfuric, and so forth) and polymers can be reacted to yield polymeric phase change materials having desired transition temperatures.

Additional exemplary phase change materials can include non-paraffins including, but not limited to, Formic acid, Caprilic acid, Glycerin, _{D-}Lattic acid, Methyl palmitate, Camphenilone, Docasyl bromide, Caprylone, Phenol, Heptadecanone, 1-Cyclohexylooctadecanem 4-Heptadacanone, *p*-Joluidine, Cyanamide, Methyl eicosanate, 3-Heptadecanone, 2-Heptadecanone, Hydrocinnamic acid, Cetyl alcohol, α-Nepthylamine, Camphene, O-Nitroaniline, 9-Heptadecanone, Thymol, Methyl behenate, Diphenyl amine, *p*-Dichlorobenzene, Oxolate, Hypophosphoric acid, *O-*Xylene dichloride, β-Chloroacetic acid, Chloroacetic acid, Nitro naphthalene, Trimyristin, Heptaudecanioc acid, α-Chloroacetic acid, Bee wax, Bees wax, Glyolic acid, Glycolic acid, *p-*Bromophenol, Azobenzene, Acrylic acid, Dinto toluent (2,4), Phenylacetic acid, Thiosinamine, Bromcamphor, Durene, Benzylamine, Methyl brombrenzoate, Alpha napthol, Glautaric acid, p-Xylene dichloride, Catechol, Quinone, Acetanilide, Succinic anhydride, Benzoic acid, Stibene, and/or Benzamide.

Additional exemplary phase change materials can include fatty acids including, but not limited to, Acetic acid, Polyethylene glycol 600, Capric acid, Eladic acid, Lauric acid, Pentadecanoic acid, Tristearin, Myristic acid, Palmatic acid, Stearic acid, Acetamide, and/or Methyl fumarate.

Additional exemplary phase change materials can include salt hydrates including, but not limited to, K₂HPO₄.6H₂O, FeBr₃·6H₂O, Mn(NO₃)₂·6H₂O, FeBr₃·6H₂O, CaCl₂·12H₂O, LiNO₃·2H₂O, LiNO₃·3H₂O, Na₂CO₃·10H₂O, Na₂SO₄·10H₂O, KFe(SO₄)₂·12H₂O, CaBr₂·6 H₂O, LiBr₂·2H₂O, Zn(NO₃)·₂H₂O, FeCl₃·6H₂O, Mn(NO₃)·₂4H₂O, Na₂HPO₄·12H₂O, CoSO₄·7H₂O, KF·2 H₂O, MgI₂·8H₂O, CaI₂·6H₂O, K₂HPO₄·7H₂O, Zn(NO₃)₂·4H₂O, Mg(NO₃)·4H₂O, Ca(NO₃)·H₂O, Fe(NO₃)₃·9H₂O, Na₂SiO₃·4H₂O, K₂HPO₄·3H₂O, Na₂S₂O₃·5H₂O, MgSO₄·7H₂O, Ca(NO₃)₂·3H₂O, Zn(NO₃)₂·2H₂O, FeCl₃·2H₂O, Ni(NO₃)₂·6H₂O, MnCl₂·4H₂O, MgCl₂·4H₂O, CH₃COONa·3H₂O, Fe(NO₃)₂·6H₂O, NaAl(SO₄)₂·10 H₂O, NaOH·H₂O, Na₃PO₄·12H₂O, LiCH₃COO·2H₂O, Al(NO₃)₂·9H₂O, Ba(OH)₂·8H₂O, Mg(NO₃)₂·6H₂O, KAl(SO₄)₂·12H₂O, and/or MgCl₂·6H₂O.

Additional exemplary phase change materials can include metallics including, but not limited to, Gallium- gallium antimony eutectic, Gallium, Cerrolow eutectic, Bi-Cd-In eutectic, Cerrobend eutectic, Bi-Pb-In eutectic, Bi-In eutectic, Bi-Pb-tin eutectic, and/or Bi-Pb eutectic.

Additional exemplary phase change materials can include organic and inorganic eutectics including, but not limited to, CaCl₂·⁶H₂O + CaBr₂·6H₂O, Triethylolethane + water + urea, C₁₄H₂₈O₂ + C₁₀H₂₀O₂, CaCl₂+ MgCl₂·6H₂O, CH₃CONH₂ + NH₂CONH₂, Triethylolethane + urea, Ca(NO₃)·4H₂O + Mg(NO₃)₃·6H₂O, CH₃COONa·3H₂O + NH₂CONH₂, NH₂CONH₂ + NH₄NO₃, Mg(NO₃)₃·6H₂O + NH₄NO₃, Mg(NO₃)₃·6H₂O + MgCl₂·6H₂O, Mg(NO₃)₃·6H₂O + MgCl₂·6H₂O, Mg(NO₃)₃·6H₂O + Al(NO₃)₂·6H₂O, Mg(NO₃)₃·6H₂O + Al(NO₃)₂·9H₂O, CH₃CONH₂ + C₁₇H₃₅COOH, Mg(NO₃)₂·6H₂O + MgBr₂·6H₂O, Napthalene + benzoic acid, NH₂CONH + NH₄BR, LiNO₃ + NH₄NO₃ + NaNO₃, LiNo₃ + NH₄NO₃ + NaNO₃, LiNo₃ + NH₄NO₃ + KNO₃, and/or LiNo₃ + NH₄NO₃ + NH₄Cl.

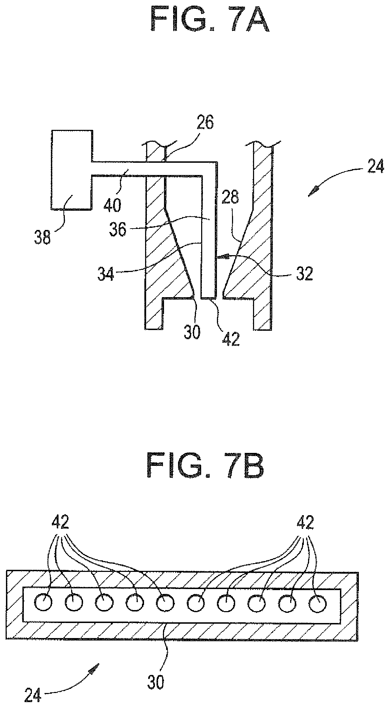

In production, the extrusion apparatus comprises screw extruder driven by a motor. Thermoplastic material is melted and conveyed to a die 24, as shown in Figures 7a and 7b. The molten thermoplastic material passes through die 24, as shown in Figures 7a and 7b, and is formed into the desired shape and cross section. Referring to Figures 7a and 7b, die 24 includes an entry portion 26, a convergent portion 28, and an orifice 30, which has a predetermined shape. The molten thermoplastic polymer enters entry portion 26 of the die 24, and is gradually shaped by the convergent portion 28 until the melt exits the orifice 30. The die 24 further includes injectors 32. Each injector 32 has a body portion 34 having a conduit 36 therein which is fluidly connected to a phase change material source 38 by means of second conduit 40 passing through the walls of die 24 around which the molten thermoplastic material must flow to pass the orifice 30. The injector 30 further includes an outlet 42. The injector 32 is arranged such that the outlet 42 is located within the orifice 30. As the molten thermoplastic polymer exits the die orifice 30, one or more phase change materials 12 is injected into the molten thermoplastic material thereby forming microcapillaries filled with one or more phase change materials 12.

The microcapillary films containing phase change materials according to the present invention are used in insulation systems, heating systems, or cooling systems for pipe or flooring applications. One or more inventive microcapillary films containing one or more phase change materials may form one or more layers in a multilayer structure, for example, a laminated multilayer structure or a coextruded multilayer structure. The microcapillary films containing one or more phase change materials may comprise one or more parallel rows of microcapillaries (channels as shown in Fig. 3. Channels 20 (microcapillaries) may be disposed anywhere in matrix (10), as shown in Figs. 3.

### Examples

Inventive microcapillary film 1 containing a phase change material was prepared according to the following process.

The matrix material comprised linear low density polyethylene (LLDPE), available under the tradename DOWLEX™ NG 5056 G having a density of approximately 0.919 g/cm3, according to ASTM-D792 and a melt index (I₂) of approximately 1.1 g/10 minutes, according to ISO 1133, from The Dow Chemical Company. The phase change material comprised of methoxypolyethylene glycols, available under the tradename CARBOWAX™ MPEG750 from The Dow Chemical Company.

Primary and secondary extruders were both single screw extruders. The primary extruder was a Betol 1820J having a screw approximately 20 mm in diameter, which was connected to a gear pump, providing a non-pulstile polymer flow. Downstream of the microcapillary film die was a set of nip rollers with an adjustable roller gap (Dr. Collin GmbH "Techline" CR72T). The secondary extruder was Betol 1420J having a screw of approximately 12 mm in diameter, which was connected to the inlet of the microcapillary film die via a heated, 0.64 cm (quarter inch), Swagelok tubing. The tubing was a short length of carefully shaped, 0.64 cm (quarter inch), tubing (SS-T4-S-049-6ME) that was wrapped in two 61 cm (2 foot), heating tapes (Omega HTWC102-002), which was wrapped in a Superwool mineral wool insulation that was encapsulated in masking tape. The tubing included k-type wire thermocouples, attached to tubes surface with 3M polyamide tape (3M 70-0062-8328-0). A small amount of copper grease (Coppaslip) was smeared onto the tips of the thermocouples to assist heat transfer.

The microcapillary film die was engineered to ensure that the open faces of the injectors were coincident with the die exit. Matrix material was extruded through a microcapillary film die containing a 14 microcapillary injector heads, having a diameter of approximately 900 µm.

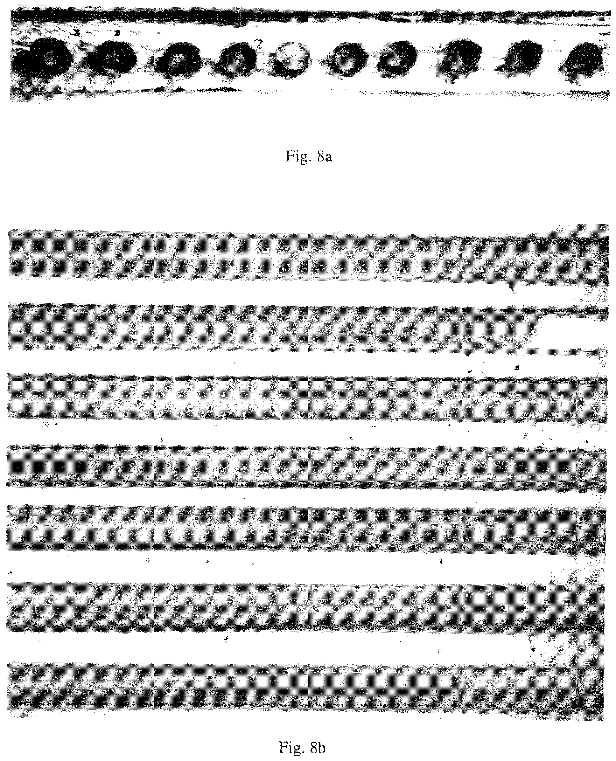

Inventive microcapillary film 1 containing phase change material (LLDPE/CARBOWAX™) is shown in figures 8a and b. The inventive microcapillary film 1 containing phase change material (LLDPE/CARBOWAX™) had a heat capacity storage of approximately 146 J/g, which was measured according to differential scanning calorimetry (DSC, second heat), as described herein below. The inventive microcapillary film 1 containing phase change material (LLDPE/CARBOWAX™) had a thickness of approximately 517 µm, a width of approximately 6.44 mm, and included 19 microcapillaries, wherein each microcapillary had a diameter of approximately 230 µm, and a void volume percent of approximately 30.7.

## Claims

1. An insulation system, heating system, or cooling system for pipe or flooring applications comprising a film having a first end and a second end, wherein said film comprises:
(a) a matrix comprising a thermoplastic material,
(b) at least one or more channels disposed in parallel in said matrix from the first end to the second end of said film, wherein said one or more channels are at least 5 µm apart from each other, wherein each said one or more channels have a diameter of at least 5 µm, and wherein each of said one or more channels have a circular cross sectional shape; and
(c) at least one or more phase change materials disposed in said one or more channels;
wherein said film has a thickness in the range of from 10 µm to 2000 µm.

2. The system of Claim 1 wherein said thermoplastic material is selected from the group consisting of polyolefin; polyamide; polyvinylidene chloride; polyvinylidene fluoride; polycarbonate; polystyrene; polyethylene vinyl alcohol, polyvinyl chloride (PVC), polylactic acid (PLA) and polyethylene terephthalate.

3. The system of Claim 2, wherein said polyolefin is polyethylene or polypropylene.

4. The system of Claim 2, wherein said polyamide is nylon 6.

5. The system of Claims 1 or 2, where said one or more phase change materials are selected from the group consisting of gas, liquid, solid or combinations thereof.

## Patentansprüche

1. Ein Isoliersystem, Heizsystem oder Kühlsystem für Rohrleitungs- oder Bodenbelagsanwendungen, beinhaltend eine Folie mit einem ersten Ende und einem zweiten Ende, wobei die Folie Folgendes beinhaltet:
(a) eine Matrix, beinhaltend ein thermoplastisches Material,
(b) mindestens einen oder mehrere Kanäle, die vom ersten Ende zum zweiten Ende der Folie parallel in der Matrix angeordnet sind, wobei der eine oder die mehrere Kanäle mindestens 5 µm voneinander beabstandet sind, wobei jeder des einen oder der mehreren Kanäle einen Durchmesser von mindestens 5 µm aufweist und wobei jeder des einen oder der mehreren Kanäle eine kreisförmige Querschnittsform aufweist; und
(c) mindestens ein oder mehrere Phasenwechselmaterialien, die in dem einen oder den mehreren Kanälen angeordnet sind;
wobei die Folie eine Dicke im Bereich von 10 µm bis 2000 µm aufweist.

2. System gemäß Anspruch 1, wobei das thermoplastische Material ausgewählt ist aus der Gruppe, bestehend aus Polyolefin; Polyamid; Polyvinylidenchlorid; Polyvinylidenfluorid; Polycarbonat; Polystyrol; Polyethylenvinylalkohol, Polyvinylchlorid (PVC), Polymilchsäure (PLA) und Polyethylenterephthalat.

3. System gemäß Anspruch 2, wobei das Polyolefin Polyethylen oder Polypropylen ist.

4. System gemäß Anspruch 2, wobei das Polyamid Nylon 6 ist.

5. System gemäß Anspruch 1 oder 2, wobei das eine oder die mehreren Phasenwechselmaterialien ausgewählt sind aus der Gruppe bestehend aus Gas, Flüssigkeit, Feststoff oder Kombinationen davon.

## Revendications

1. Un système d'isolation, système de chauffage, ou système de refroidissement pour des applications de tuyaux ou de revêtements de sol comprenant un film ayant une première extrémité et une deuxième extrémité, ledit film comprenant :
(a) une matrice comprenant un matériau thermoplastique,
(b) au moins un ou plusieurs canaux disposés en parallèle dans ladite matrice de la première extrémité à la seconde extrémité dudit film, ledit ou lesdits canaux étant espacés d'au moins 5 µm les uns des autres, chacun dudit canal ou desdits canaux ayant un diamètre d'au moins 5 µm, et chacun dudit canal ou desdits canaux ayant une section transversale de forme circulaire ; et
(c) au moins un ou plusieurs matériaux à changement de phase disposés dans ledit ou lesdits canaux ;
ledit film ayant une épaisseur dans la plage allant de 10 µm à 2000 µm.

2. Le système de la revendication 1, dans lequel ledit matériau thermoplastique est sélectionné dans le groupe consistant en de la polyoléfine ; du polyamide ; du polychlorure de vinylidène ; du polyfluorure de vinylidène ; du polycarbonate ; du polystyrène ; du polyéthylène alcool vinylique, du polychlorure de vinyle (PVC), de l'acide polylactique (PLA) et du polytéréphtalate d'éthylène.

3. Le système de la revendication 2, dans lequel ladite polyoléfine est le polyéthylène ou le polypropylène.

4. Le système de la revendication 2, dans lequel ledit polyamide est le nylon 6.

5. Le système de la revendication 1 ou de la revendication 2, où ledit ou lesdits matériaux à changement de phase sont sélectionnés dans le groupe consistant en un gaz, un liquide, un solide ou des combinaisons de ceux-ci.
